# EUROPEAN PATENT SPECIFICATION

(11) **EP 2 443 543 B1**
(45) Date of publication and mention of the grant of the patent: **17.12.2014**
(21) Application number: 10728492.9
(22) Date of filing: 09.06.2010
(51) Int. Cl.: G06F 3/06, G06F 17/30, G11C 29/00

(54) **MULTI-BANK NON-VOLATILE MEMORY SYSTEM WITH SATELLITE FILE SYSTEM**
NICHTFLÜCHTIGES MULTIBANK-SPEICHERSYSTEM MIT SATELLITENDATEISYSTEM
SYSTÈME DE MÉMOIRE NON VOLATILE MULTI-MODULES AVEC SYSTÈME DE FICHIER SATELLITE

(30) Priority: 16.06.2009 US 485500
(43) Date of publication of application: 25.04.2012
(73) Proprietor: SanDisk Technologies Inc., Plano, Texas 75024 (US)
(72) Inventor: RAJAGOPALAN, Saranyan, San Jose, California 95134 (US); SCHROTER, Charles, M., Los Gatos, California 95032 (US)
(74) Representative: Prock, Thomas
(86) International application number: PCT/US2010/038014
(87) International publication number: WO 2010/147827

(56) References cited:
- WO-A1-2008/070173
- US-A- 4 818 932
- US-A- 6 006 307

## Description

### BACKGROUND AND SUMMARY

This application relates to the operation of re-programmable non-volatile memory systems such as semiconductor flash memory, and, more specifically, to the management of such system that employ a multiple bank structure.

Solid-state memory capable of nonvolatile storage of charge, particularly in the form of EEPROM and flash EEPROM packaged as a small form factor card, has recently become the storage of choice in a variety of mobile and handheld devices, notably information appliances and consumer electronics products. Unlike RAM (random access memory) that is also solid-state memory, flash memory is non-volatile, and retains its stored data even after power is turned off. Also, unlike ROM (read only memory), flash memory is rewritable similar to a disk storage device. In spite of the higher cost, flash memory is increasingly being used in mass storage applications. Conventional mass storage, based on rotating magnetic medium such as hard drives and floppy disks, is unsuitable for the mobile and handheld environment. This is because disk drives tend to be bulky, are prone to mechanical failure and have high latency and high power requirements. These undesirable attributes make disk-based storage impractical in most mobile and portable applications. On the other hand, flash memory, both embedded and in the form of a removable card is ideally suited in the mobile and handheld environment because of its small size, low power consumption, high speed and high reliability features.

Flash EEPROM is similar to EEPROM (electrically erasable and programmable read-only memory) in that it is a non-volatile memory that can be erased and have new data written or "programmed" into their memory cells. Both utilize a floating (unconnected) conductive gate, in a field effect transistor structure, positioned over a channel region in a semiconductor substrate, between source and drain regions. A control gate is then provided over the floating gate. The threshold voltage characteristic of the transistor is controlled by the amount of charge that is retained on the floating gate. That is, for a given level of charge on the floating gate, there is a corresponding voltage (threshold) that must be applied to the control gate before the transistor is turned "on" to permit conduction between its source and drain regions. In particular, flash memory such as Flash EEPROM allows entire blocks of memory cells to be erased at the same time.

The floating gate can hold a range of charges and therefore can be programmed to any threshold voltage level within a threshold voltage window. The size of the threshold voltage window is delimited by the minimum and maximum threshold levels of the device, which in turn correspond to the range of the charges that can be programmed onto the floating gate. The threshold window generally depends on the memory device's characteristics, operating conditions and history. Each distinct, resolvable threshold voltage level range within the window may, in principle, be used to designate a definite memory state of the cell.

The transistor serving as a memory cell is typically programmed to a "programmed" state by one of two mechanisms. In "hot electron injection," a high voltage applied to the drain accelerates electrons across the substrate channel region. At the same time a high voltage applied to the control gate pulls the hot electrons through a thin gate dielectric onto the floating gate. In "tunneling injection," a high voltage is applied to the control gate relative to the substrate. In this way, electrons are pulled from the substrate to the intervening floating gate. While the term "program" has been used historically to describe writing to a memory by injecting electrons to an initially erased charge storage unit of the memory cell so as to alter the memory state, it has now been used interchangeable with more common terms such as "write" or "record."

The memory device may be erased by a number of mechanisms. For EEPROM, a memory cell is electrically erasable, by applying a high voltage to the substrate relative to the control gate so as to induce electrons in the floating gate to tunnel through a thin oxide to the substrate channel region (i.e., Fowler-Nordheim tunneling.) Typically, the EEPROM is erasable byte by byte. For flash EEPROM, the memory is electrically erasable either all at once or one or more minimum erasable blocks at a time, where a minimum erasable block may consist of one or more sectors and each sector may store 512 bytes or more of data.

The memory device typically comprises one or more memory chips that may be mounted on a card. Each memory chip comprises an array of memory cells supported by peripheral circuits such as decoders and erase, write and read circuits. The more sophisticated memory devices also come with a controller that performs intelligent and higher level memory operations and interfacing.

There are many commercially successful non-volatile solid-state memory devices being used today. These memory devices may be flash EEPROM or may employ other types of nonvolatile memory cells. Examples of flash memory and systems and methods of manufacturing them are given in United States patents nos. 5,070,032, 5,095,344, 5,315,541, 5,343,063, and 5,661,053, 5,313,421 and 6,222,762. In particular, flash memory devices with NAND string structures are described in United States patent nos. 5,570,315, 5,903,495, 6,046,935. Also nonvolatile memory devices are also manufactured from memory cells with a dielectric layer for storing charge. Instead of the conductive floating gate elements described earlier, a dielectric layer is used. Such memory devices utilizing dielectric storage element have been described by Eitan et al., "NROM: A Novel Localized Trapping, 2-Bit Nonvolatile Memory Cell," IEEE Electron Device Letters, vol. 21, no. 11, November 2000, pp. 543-545. An ONO dielectric layer extends across the channel between source and drain diffusions. The charge for one data bit is localized in the dielectric layer adjacent to the drain, and the charge for the other data bit is localized in the dielectric layer adjacent to the source. For example, United States patents nos. 5,768,192 and 6,011,725 disclose a nonvolatile memory cell having a trapping dielectric sandwiched between two silicon dioxide layers. Multi-state data storage is implemented by separately reading the binary states of the spatially separated charge storage regions within the dielectric.

In addition, international patent application WO 2008/070173 discloses an apparatus, system and method for solid-state storage as a cache for high-capacity, non-volatile storage.

In order to improve read and program performance, multiple charge storage elements or memory transistors in an array are read or programmed in parallel. Thus, a "page" of memory elements are read or programmed together. In existing memory architectures, a row typically contains several interleaved pages or it may constitute one page. All memory elements of a page will be read or programmed together.

In flash memory systems, erase operations may take as much as an order of magnitude longer than read and program operations. Thus, it is desirable to have the erase block of substantial size. In this way, the erase time is amortized over a large aggregate of memory cells.

The nature of flash memory predicates that data must be written to an erased memory location. If data of a certain logical address from a host is to be updated, one way is rewrite the update data in the same physical memory location. That is, the logical to physical address mapping is unchanged. However, this will mean the entire erase block containing that physical location will have to be first erased and then rewritten with the updated data. This method of update is inefficient, as it requires an entire erase block to be erased and rewritten, especially if the data to be updated only occupies a small portion of the erase block. It will also result in a higher frequency of erase recycling of the memory block, which is undesirable in view of the limited endurance of this type of memory device.

Data communicated through external interfaces of host systems, memory systems and other electronic systems are addressed and mapped into the physical locations of a flash memory system. Typically, addresses of data files generated or received by the system are mapped into distinct ranges of a continuous logical address space established for the system in terms of logical blocks of data (hereinafter the "LBA interface"). The extent of the address space is typically sufficient to cover the full range of addresses that the system is capable of handling. In one example, magnetic disk storage drives communicate with computers or other host systems through such a logical address space. This address space has an extent sufficient to address the entire data storage capacity of the disk drive.

Flash memory systems are most commonly provided in the form of a memory card or flash drive that is removably connected with a variety of hosts such as a personal computer, a camera or the like, but may also be embedded within such host systems. When writing data to the memory, the host typically assigns unique logical addresses to sectors, clusters or other units of data within a continuous virtual address space of the memory system. Like a disk operating system (DOS), the host writes data to, and reads data from, addresses within the logical address space of the memory system. A controller within the memory system translates logical addresses received from the host into physical addresses within the memory array, where the data are actually stored, and then keeps track of these address translations. The data storage capacity of the memory system is at least as large as the amount of data that is addressable over the entire logical address space defined for the memory system.

In current commercial flash memory systems, the size of the erase unit has been increased to a block of enough memory cells to store multiple sectors of data. Indeed, many pages of data are stored in one block, and a page may store multiple sectors of data. Further, two or more blocks are often operated together as metablocks, and the pages of such blocks logically linked together as metapages. A page or metapage of data are written and read together, which can include many sectors of data, thus increasing the parallelism of the operation. Along with such large capacity operating units the challenge is to operate them efficiently.

For ease of explanation, unless otherwise specified, it is intended that the term "block" as used herein refer to either the block unit of erase or a multiple block "metablock," depending upon whether metablocks are being used in a specific system. Similarly, reference to a "page" herein may refer to a unit of programming within a single block or a "metapage" within a metablock, depending upon the system configuration.

When the currently prevalent LBA interface to the memory system is used, files generated by a host to which the memory is connected are assigned unique addresses within the logical address space of the interface. The memory system then commonly maps data between the logical address space and pages of the physical blocks of memory. The memory system keeps track of how the logical address space is mapped into the physical memory but the host is unaware of this. The host keeps track of the addresses of its data files within the logical address space but the memory system operates with little or no knowledge of this mapping.

Another problem with managing flash memory system has to do with system control and directory data. The data is produced and accessed during the course of various memory operations. Thus, its efficient handling and ready access will directly impact performance. It would be desirable to maintain this type of data in flash memory because flash memory is meant for storage and is nonvolatile. However, with an intervening file management system between the controller and the flash memory, the data can not be accessed as directly. Also, system control and directory data tends to be active and fragmented, which is not conducive to storing in a system with large size block erase. Conventionally, this type of data is set up in the controller RAM, thereby allowing direct access by the controller. After the memory device is powered up, a process of initialization enables the flash memory to be scanned in order to compile the necessary system control and directory information to be placed in the controller RAM. This process takes time and requires controller RAM capacity, all the more so with ever increasing flash memory capacity.

In general, there is continuing search to improve the capacity and performance of non-volatile memory systems. In particular, this can include methods to improve the amount and efficiency of parallelism in memory systems.

### SUMMARY OF THE INVENTION

According to one aspect of the invention there is provided a non-volatile memory system. The system comprises a non-volatile memory circuit having a plurality of independently operable banks including a first bank and one or more other banks, each of the banks including one or more non-volatile memory arrays to store user data and system data. The system further comprises a controller circuit to manage the storage of user data on the memory circuit. The circuit includes a plurality of bank interfaces, each connected to a respective one of the banks to transfer data between the controller and the corresponding bank and processing circuitry for executing computer executable code stored in the memory system. The processing circuit, when executing the computer executable code, executes a plurality of threads, each capable of independently and concurrently executing read and write operations on a corresponding one of the banks. The first bank stores system data including a file system. A corresponding thread of the plurality of threads is configured to use the file system to execute read and write operations on the first bank. Each of the one or more other banks stores system data including a copy of a portion of the file system. For each of the one or more other banks, a corresponding thread of the plurality of threads is configured to use the respective copy of the file system stored on the respective one of the one or more other banks to execute read and write operations on the respective one of the one or more other banks.

According to a second aspect of the invention there is provided a method of operation of a non-volatile memory system. The memory system includes a non-volatile memory circuit having a plurality of independently operable banks including a first bank and a second bank and a controller circuit to manage the storage of user data on the memory circuit. The method comprises storing in non-volatile memory on the first bank system data including a file system and storing in non-volatile memory on the second bank system data including a copy of a portion of the file system. The method further comprises executing on the controller a first thread for executing read and write operations on the first bank using the file system and, concurrently with executing the first thread, executing on the controller a second thread for executing read and write operations on the second bank using the copy of the file system independently of the file system stored in the first bank.

Various aspects, advantages, features and embodiments of the present invention are included in the following description of exemplary examples thereof, which description should be taken in conjunction with the accompanying drawings. To the extent of any inconsistency or conflict in the definition or use of terms between any of the referenced publications, documents or things and the present application, those of the present application shall prevail

### BRIEF DESCRIPTION OF THE DRAWINGS

**FIG. 1** illustrates schematically the main hardware components of a memory system suitable for implementing the present invention.
**FIG. 2** illustrates schematically a non-volatile memory cell.
**FIG. 3** illustrates the relation between the source-drain current I_{D} and the control gate voltage V_{CG} for four different charges Q1-Q4 that the floating gate may be selectively storing at any one time.
**FIG. 4A** illustrates schematically a string of memory cells organized into an NAND string.
**FIG. 4B** illustrates an example of an NAND array 210 of memory cells, constituted from NAND strings 50 such as that shown in **FIG. 4A****.**
**FIG. 5** illustrates a page of memory cells, organized for example in the NAND configuration, being sensed or programmed in parallel.
**FIG. 6(0) - 6(2)** illustrate an example of programming a population of 4-state memory cells.
**FIGs. 7A-7E** illustrate the programming and reading of the 4-state memory encoded with a given 2-bit code.
**FIG. 8** illustrates the memory being managed by a memory manager with is a software component that resides in the controller.
**FIG. 9** illustrates the software modules of the back-end system.
**FIGs. 10A(i) - 10A(iii)** illustrate schematically the mapping between a logical group and a metablock. **FIG. 10B** illustrates schematically the mapping between logical groups and metablocks.
**FIG. 11** is a block diagram of an example of a multi-bank memory system using a satellite file system.
**FIG. 12** provides some detail of elements stored in the main and satellite file system in the embodiment of **FIG. 11****.**

### DETAILED DESCRIPTION

### MEMORY SYSTEM

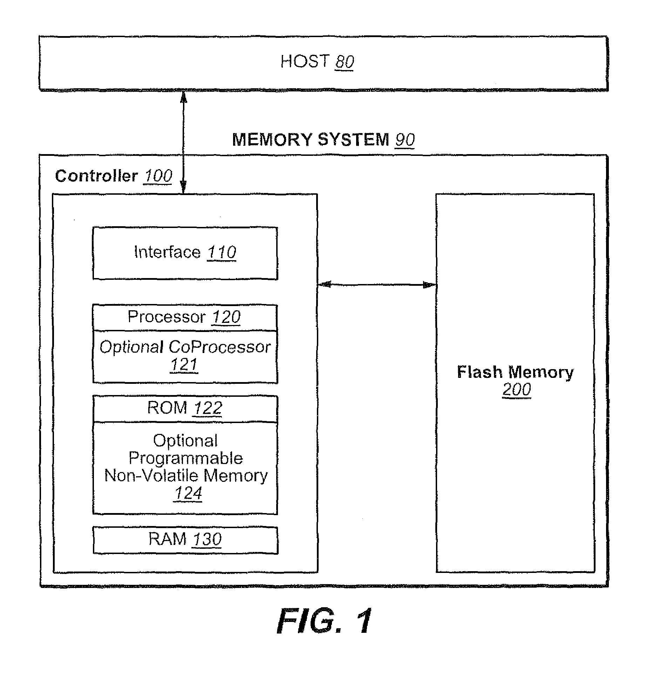

**FIG. 1 to FIG. 7** provide example memory systems in which the various aspects of the present invention may be implemented or illustrated.

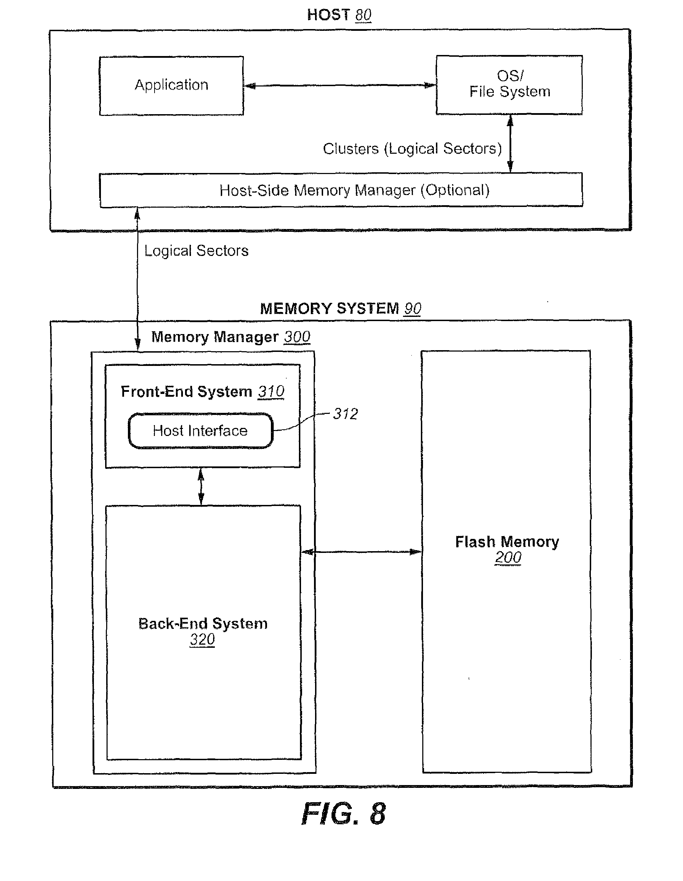

**FIG. 8 to FIG. 10** illustrate preferred memory and block architectures for implementing the various aspects of the present invention.

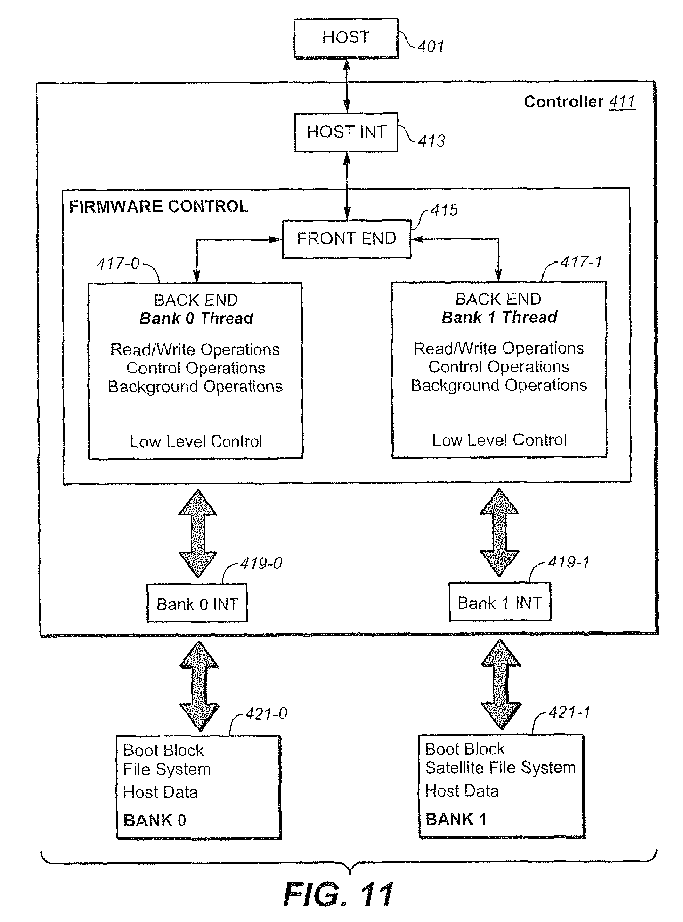

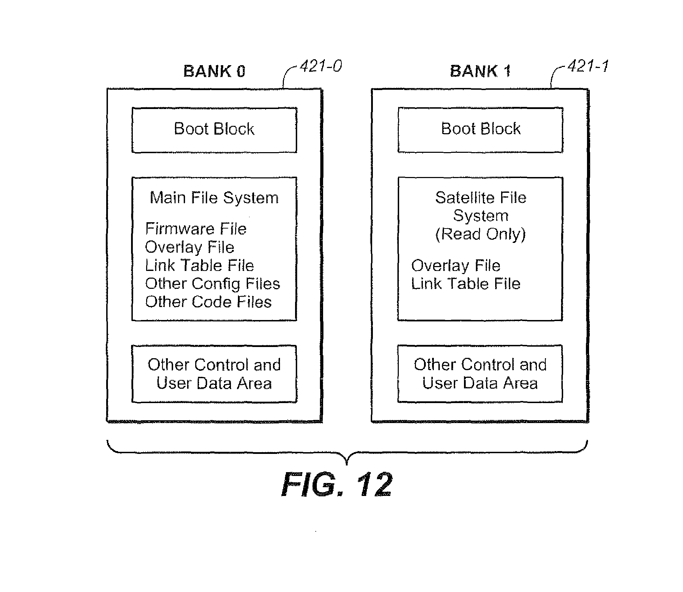

**FIG. 11** and **FIG. 12** illustrate the use of a satellite file system in a multi-bank system.

**FIG. 1** illustrates schematically the main hardware components of a memory system suitable for implementing the present invention. The memory system 90 typically operates with a host 80 through a host interface. The memory system is typically in the form of a memory card or an embedded memory system. The memory system 90 includes a memory 200 whose operations are controlled by a controller 100. The memory 200 comprises of one or more array of non-volatile memory cells distributed over one or more integrated circuit chip. The controller 100 includes an interface 110, a processor 120, an optional coprocessor 121, ROM 122 (read-only-memory), RAM 130 (random access memory) and optionally programmable nonvolatile memory 124. The interface 110 has one component interfacing the controller to a host and another component interfacing to the memory 200. Firmware stored in nonvolatile ROM 122 and/or the optional nonvolatile memory 124 provides codes for the processor 120 to implement the functions of the controller 100. Error correction codes may be processed by the processor 120 or the optional coprocessor 121. In an alternative embodiment, the controller 100 is implemented by a state machine (not shown.) In yet another embodiment, the controller 100 is implemented within the host.

### Physical Memory Structure

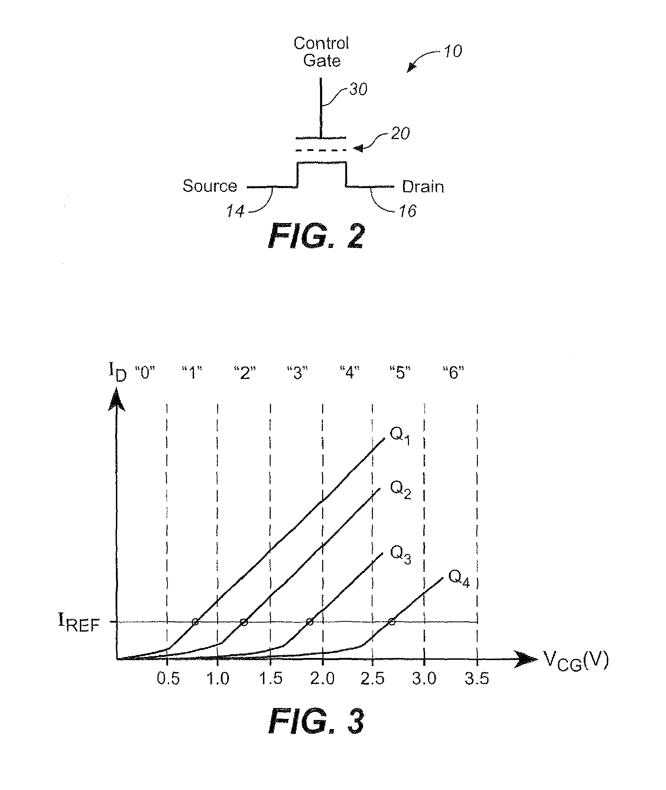

**FIG. 2** illustrates schematically a non-volatile memory cell. The memory cell 10 can be implemented by a field-effect transistor having a charge storage unit 20, such as a floating gate or a dielectric layer. The memory cell 10 also includes a source 14, a drain 16, and a control gate 30.

There are many commercially successful non-volatile solid-state memory devices being used today. These memory devices may employ different types of memory cells, each type having one or more charge storage element.

Typical non-volatile memory cells include EEPROM and flash EEPROM. Examples of EEPROM cells and methods of manufacturing them are given in United States patent no. 5,595,924. Examples of flash EEPROM cells, their uses in memory systems and methods of manufacturing them are given in United States patents nos. 5,070,032, 5,095,344, 5,315,541, 5,343,063, 5,661,053, 5,313,421 and 6,222,762. In particular, examples of memory devices with NAND cell structures are described in United States patent nos. 5,570,315, 5,903,495, 6,046,935. Also, examples of memory devices utilizing dielectric storage element have been described by Eitan et al., "NROM: A Novel Localized Trapping, 2-Bit Nonvolatile Memory Cell," IEEE Electron Device Letters, vol. 21, no. 11, November 2000, pp. 543-545, and in United States patents nos. 5,768,192 and 6,011,725.

In practice, the memory state of a cell is usually read by sensing the conduction current across the source and drain electrodes of the cell when a reference voltage is applied to the control gate. Thus, for each given charge on the floating gate of a cell, a corresponding conduction current with respect to a fixed reference control gate voltage may be detected. Similarly, the range of charge programmable onto the floating gate defines a corresponding threshold voltage window or a corresponding conduction current window.

Alternatively, instead of detecting the conduction current among a partitioned current window, it is possible to set the threshold voltage for a given memory state under test at the control gate and detect if the conduction current is lower or higher than a threshold current. In one implementation the detection of the conduction current relative to a threshold current is accomplished by examining the rate the conduction current is discharging through the capacitance of the bit line.

**FIG. 3** illustrates the relation between the source-drain current I_{D} and the control gate voltage V_{CG} for four different charges Q1-Q4 that the floating gate may be selectively storing at any one time. The four solid I_{D} versus V_{CG} curves represent four possible charge levels that can be programmed on a floating gate of a memory cell, respectively corresponding to four possible memory states. As an example, the threshold voltage window of a population of cells may range from 0.5V to 3.5V. Seven possible memory states "0", "1", "2", "3", "4", "5", "6", respectively representing one erased and six programmed states may be demarcated by partitioning the threshold window into five regions in interval of 0.5V each. For example, if a reference current, IREF of 2 µA is used as shown, then the cell programmed with Q1 may be considered to be in a memory state "1" since its curve intersects with I_{REF} in the region of the threshold window demarcated by VCG = 0.5V and 1.0V. Similarly, Q4 is in a memory state "5".

As can be seen from the description above, the more states a memory cell is made to store, the more finely divided is its threshold window. For example, a memory device may have memory cells having a threshold window that ranges from -1.5V to 5V. This provides a maximum width of 6.5V. If the memory cell is to store 16 states, each state may occupy from 200mV to 300mV in the threshold window. This will require higher precision in programming and reading operations in order to be able to achieve the required resolution.

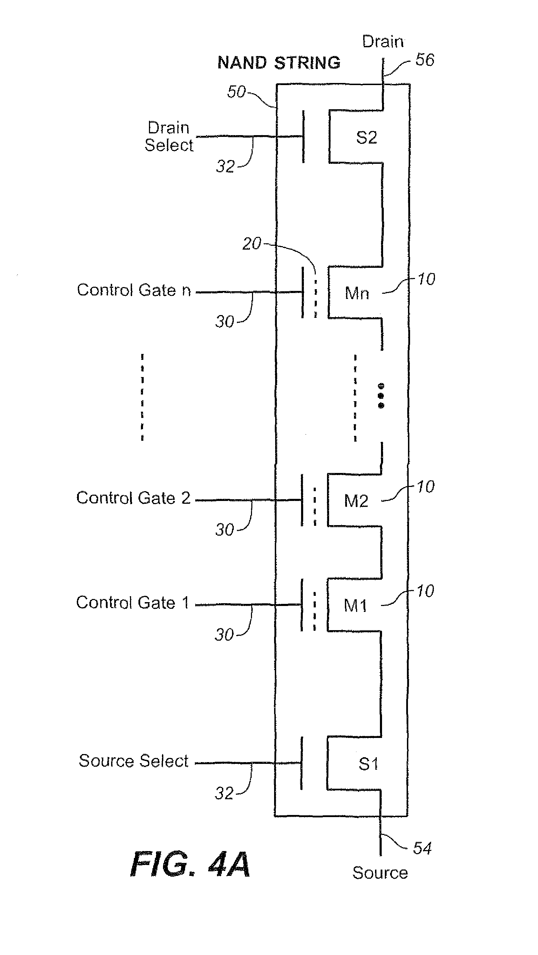

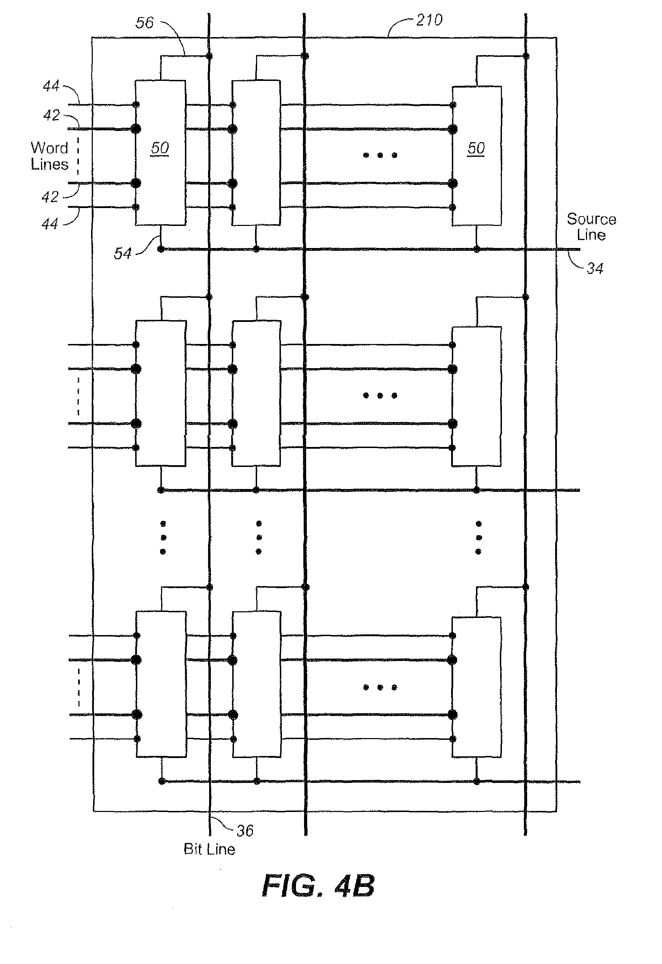

**FIG. 4A** illustrates schematically a string of memory cells organized into an NAND string. An NAND string 50 comprises of a series of memory transistors M1, M2, ... Mn (e.g., n= 4, 8, 16 or higher) daisy-chained by their sources and drains. A pair of select transistors S1, S2 controls the memory transistors chain's connection to the external via the NAND string's source terminal 54 and drain terminal 56 respectively. In a memory array, when the source select transistor S1 is turned on, the source terminal is coupled to a source line (see **FIG. 4B**). Similarly, when the drain select transistor S2 is turned on, the drain terminal of the NAND string is coupled to a bit line of the memory array. Each memory transistor 10 in the chain acts as a memory cell. It has a charge storage element 20 to store a given amount of charge so as to represent an intended memory state. A control gate 30 of each memory transistor allows control over read and write operations. As will be seen in **FIG. 4B****,** the control gates 30 of corresponding memory transistors of a row of NAND string are all connected to the same word line. Similarly, a control gate 32 of each of the select transistors S1, S2 provides control access to the NAND string via its source terminal 54 and drain terminal 56 respectively. Likewise, the control gates 32 of corresponding select transistors of a row of NAND string are all connected to the same select line.

When an addressed memory transistor 10 within an NAND string is read or is verified during programming, its control gate 30 is supplied with an appropriate voltage. At the same time, the rest of the non-addressed memory transistors in the NAND string 50 are fully turned on by application of sufficient voltage on their control gates. In this way, a conductive path is effective created from the source of the individual memory transistor to the source terminal 54 of the NAND string and likewise for the drain of the individual memory transistor to the drain terminal 56 of the cell. Memory devices with such NAND string structures are described in United States patent nos. 5,570,315, 5,903,495, 6,046,935.

**FIG. 4B** illustrates an example of an NAND array 210 of memory cells, constituted from NAND strings 50 such as that shown in **FIG. 4A****.** Along each column of NAND strings, a bit line such as bit line 36 is coupled to the drain terminal 56 of each NAND string. Along each bank of NAND strings, a source line such as source line 34 is couple to the source terminals 54 of each NAND string. Also the control gates along a row of memory cells in a bank of NAND strings are connected to a word line such as word line 42. The control gates along a row of select transistors in a bank of NAND strings are connected to a select line such as select line 44. An entire row of memory cells in a bank of NAND strings can be addressed by appropriate voltages on the word lines and select lines of the bank of NAND strings. When a memory transistor within a NAND string is being read, the remaining memory transistors in the string are turned on hard via their associated word lines so that the current flowing through the string is essentially dependent upon the level of charge stored in the cell being read.

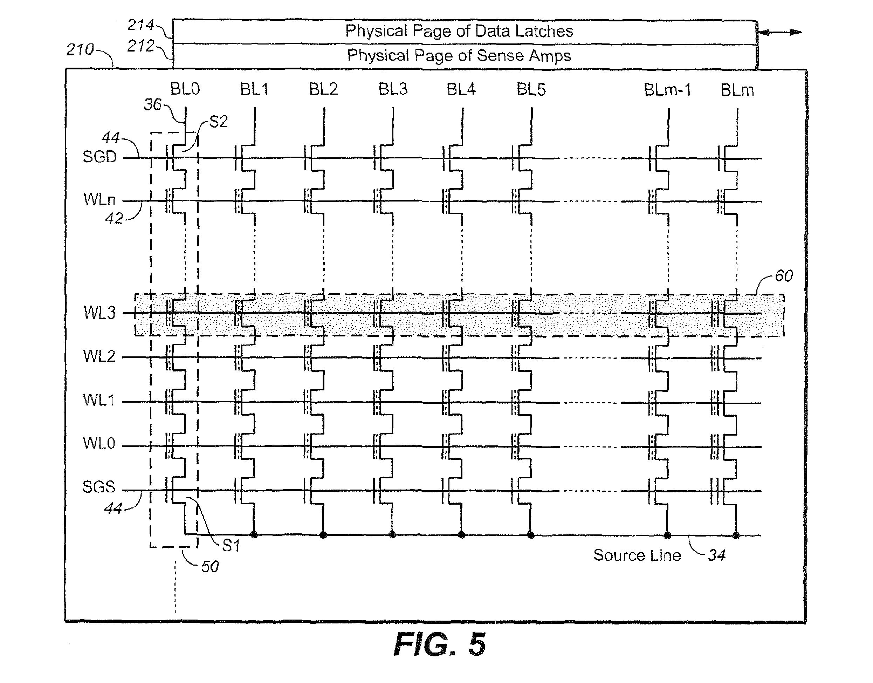

**FIG. 5** illustrates a page of memory cells, organized for example in the NAND configuration, being sensed or programmed in parallel. **FIG. 5** essentially shows a bank of NAND strings 50 in the memory array 210 of **FIG. 4B****,** where the detail of each NAND string is shown explicitly as in **FIG. 4A****.** A "page" such as the page 60, is a group of memory cells enabled to be sensed or programmed in parallel. This is accomplished by a corresponding page of sense amplifiers 212. The sensed results are latches in a corresponding set of latches 214. Each sense amplifier can be coupled to a NAND string via a bit line. The page is enabled by the control gates of the cells of the page connected in common to a word line 42 and each cell accessible by a sense amplifier accessible via a bit line 36. As an example, when respectively sensing or programming the page of cells 60, a sensing voltage or a programming voltage is respectively applied to the common word line WL3 together with appropriate voltages on the bit lines.

### Physical Organization of the Memory

One important difference between flash memory and of type of memory is that a cell must be programmed from the erased state. That is the floating gate must first be emptied of charge. Programming then adds a desired amount of charge back to the floating gate. It does not support removing a portion of the charge from the floating to go from a more programmed state to a lesser one. This means that update data cannot overwrite existing one and must be written to a previous unwritten location.

Furthermore erasing is to empty all the charges from the floating gate and generally takes appreciably time. For that reason, it will be cumbersome and very slow to erase cell by cell or even page by page. In practice, the array of memory cells is divided into a large number of blocks of memory cells. As is common for flash EEPROM systems, the block is the unit of erase. That is, each block contains the minimum number of memory cells that are erased together. While aggregating a large number of cells in a block to be erased in parallel will improve erase performance, a large size block also entails dealing with a larger number of update and obsolete data. Just before the block is erased, a garbage collection is required to salvage the non-obsolete data in the block.

Each block is typically divided into a number of pages. A page is a unit of programming or reading. In one embodiment, the individual pages may be divided into segments and the segments may contain the fewest number of cells that are written at one time as a basic programming operation. One or more pages of data are typically stored in one row of memory cells. A page can store one or more sectors. A sector includes user data and overhead data. Multiple blocks and pages distributed across multiple arrays can also be operated together as metablocks and metapages. If they are distributed over multiple chips, they can be operated together as megablocks and megapage.

### Examples of Multi-level Cell ("MLC") Memory Partitioning

A nonvolatile memory in which the memory cells each stores multiple bits of data has already been described in connection with **FIG. 3****.** A particular example is a memory formed from an array of field-effect transistors, each having a charge storage layer between its channel region and its control gate. The charge storage layer or unit can store a range of charges, giving rise to a range of threshold voltages for each field-effect transistor. The range of possible threshold voltages spans a threshold window. When the threshold window is partitioned into multiple sub-ranges or zones of threshold voltages, each resolvable zone is used to represent a different memory states for a memory cell. The multiple memory states can be coded by one or more binary bits. For example, a memory cell partitioned into four zones can support four states which can be coded as 2-bit data. Similarly, a memory cell partitioned into eight zones can support eight memory states which can be coded as 3-bit data, etc.

### All-bit, Full-Sequence MLC Programming

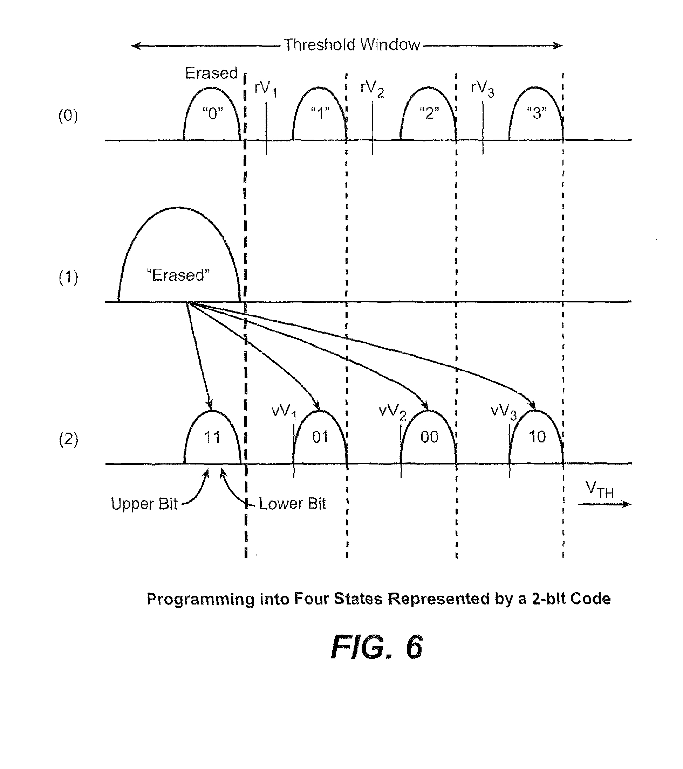

**FIG. 6(0) - 6(2)** illustrate an example of programming a population of 4-state memory cells. **FIG. 6(0)** illustrates the population of memory cells programmable into four distinct distributions of threshold voltages respectively representing memory states "0", "1", "2" and "3". **FIG. 6(1)** illustrates the initial distribution of "erased" threshold voltages for an erased memory. **FIG. 6(2)** illustrates an example of the memory after many of the memory cells have been programmed. Essentially, a cell initially has an "erased" threshold voltage and programming will move it to a higher value into one of the three zones demarcated by verify levels vV₁, vV₂ and vV₃. In this way, each memory cell can be programmed to one of the three programmed state "1", "2" and "3" or remain un-programmed in the "erased" state. As the memory gets more programming, the initial distribution of the "erased" state as shown in **FIG. 6(1)** will become narrower and the erased state is represented by the "0" state.

A 2-bit code having a lower bit and an upper bit can be used to represent each of the four memory states. For example, the "0", "1", "2" and "3" states are respectively represented by "11", "01", "00" and '10". The 2-bit data may be read from the memory by sensing in "full-sequence" mode where the two bits are sensed together by sensing relative to the read demarcation threshold values rV₁, rV₂ and rV₃ in three sub-passes respectively.

### Bit-by-Bit MLC Programming and Reading

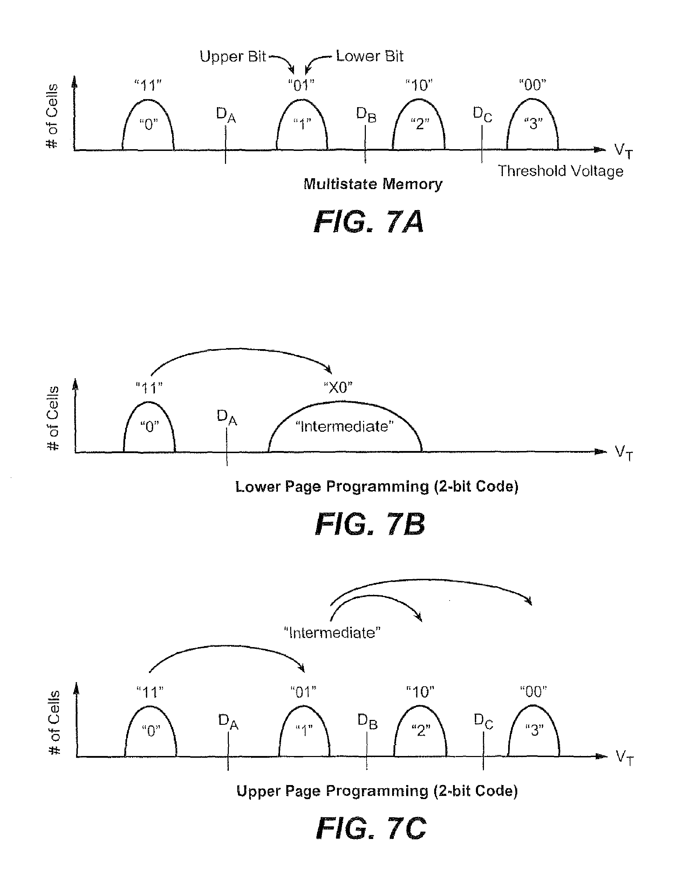

**FIGs. 7A-7E** illustrate the programming and reading of the 4-state memory encoded with a given 2-bit code. **FIG. 7A** illustrates threshold voltage distributions of the 4-state memory array when each memory cell stores two bits of data using the 2-bit code. Such a 2-bit code has been disclosed in US Patent No. 7,057,939.

**FIG. 7B** illustrates the lower page programming (lower bit) in a 2-pass programming scheme using the 2-bit code. The fault-tolerant LM New code essentially avoids any upper page programming to transit through any intermediate states. Thus, the first pass lower page programming has the logical state (upper bit, lower bit) = (1, 1) transits to some intermediate state (x, 0) as represented by programming the "unprogrammed" memory state "0" to the "intermediate" state designated by (x, 0) with a programmed threshold voltage greater than D_{A} but less than D_{C}.

**FIG. 7C** illustrates the upper page programming (upper bit) in the 2-pass programming scheme using the 2-bit code. In the second pass of programming the upper page bit to "0", if the lower page bit is at "1", the logical state (1, 1) transits to (0, 1) as represented by programming the "unprogrammed" memory state "0" to "1". If the lower page bit is at "0", the logical state (0, 0) is obtained by programming from the "intermediate" state to "3". Similarly, if the upper page is to remain at "1", while the lower page has been programmed to "0", it will require a transition from the "intermediate" state to (1, 0) as represented by programming the "intermediate" state to "2".

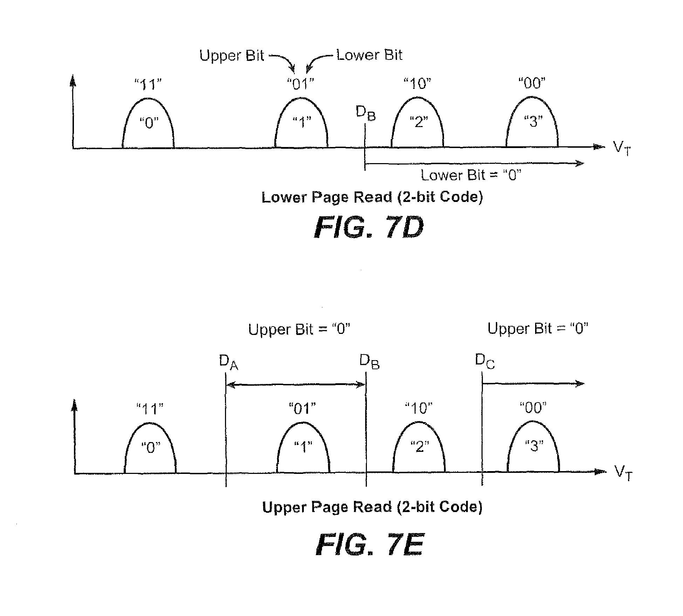

**FIG. 7D** illustrates the read operation that is required to discern the lower bit of the 4-state memory encoded with the 2-bit code. A readB operation is first performed to determine if the LM flag can be read. If so, the upper page has been programmed and the readB operation will yield the lower page data correctly. On the other hand, if the upper page has not yet been programmed, the lower page data will be read by a readA operation.

**FIG. 7E** illustrates the read operation that is required to discern the upper bit of the 4-state memory encoded with the 2-bit code. As is clear from the figure, the upper page read will require a 3-pass read of readA, readB and readC, respectively relative to the demarcation threshold voltages D_{A}, D_{B} and D_{C}.

In the bit-by-bit scheme for a 2-bit memory, a physical page of memory cells will store two logical data pages, a lower data page corresponding to the lower bit and an upper data page corresponding to the upper bit.

### Binary and MLC Memory Partitioning

**FIG. 6** and **FIG. 7** illustrate examples of a 2-bit (also referred to as "D2") memory. As can be seen, a D2 memory has its threshold range or window partitioned into 4 regions, designating 4 states. Similarly, in D3, each cell stores 3 bits (low, middle and upper bits) and there are 8 regions. In D4, there are 4 bits and 16 regions, etc. As the memory's finite threshold window is partitioned into more regions, the resolution and for programming and reading will necessarily become finer. Two issues arise as the memory cell is configured to store more bits.

First, programming or reading will be slower when the threshold of a cell must be more accurately programmed or read. In fact in practice the sensing time (needed in programming and reading) tends to increase as the square of the number of partitioning levels.

Secondly, flash memory has an endurance problem as it ages with use. When a cell is repeatedly programmed and erased, charges are shuttled in and out of the floating gate 20 (see **FIG. 2**) by tunneling across a dielectric. Each time some charges may become trapped in the dielectric and will modify the threshold of the cell. In fact over use, the threshold window will progressively narrow. Thus, MLC memory generally is designed with tradeoffs between capacity, performance and reliability.

Conversely, it will be seen for a binary memory, the memory's threshold window is only partitioned into two regions. This will allow a maximum margin of errors. Thus, binary partitioning while diminished in storage capacity will provide maximum performance and reliability.

The multi-pass, bit-by-bit programming and reading technique described in connection with **FIG. 7** provides a smooth transition between MLC and binary partitioning. In this case, if the memory is programmed with only the lower bit, it is effectively a binary partitioned memory. While this approach does not fully optimize the range of the threshold window as in the case of a single-level cell ("SLC") memory, it has the advantage of using the same demarcation or sensing level as in the operations of the lower bit of the MLC memory. As will be described later, this approach allows a MLC memory to be "expropriated" for use as a binary memory, or vice versa. How it should be understood that MLC memory tends to have more stringent specification for usage.

### Binary Memory and Partial Page Programming

The charge programmed into the charge storage element of one memory cell produces an electric field that perturbs the electric field of a neighboring memory cell. This will affect the characteristics of the neighboring memory cell which essentially is a field-effect transistor with a charge storage element. In particular, when sensed the memory cell will appear to have a higher threshold level (or more programmed) than when it is less perturbed.

In general, if a memory cell is program-verified under a first field environment and later is read again under a different field environment due to neighboring cells subsequently being programmed with different charges, the read accuracy may be affected due to coupling between neighboring floating gates in what is referred to as the "Yupin Effect". With ever higher integration in semiconductor memories, the perturbation of the electric field due to the stored charges between memory cells (Yupin effect) becomes increasing appreciable as the inter-cellular spacing shrinks.

The Bit-by-Bit MLC Programming technique described in connection with **FIG. 7** above is designed to minimize program disturb from cells along the same word line. As can be seen from **FIG. 7B****,** in a first of the two programming passes, the thresholds of the cells are moved at most half way up the threshold window. The effect of the first pass is overtaken by the final pass. In the final pass, the thresholds are only moved a quarter of the way. In other words, for D2, the charge difference among neighboring cells is limited to a quarter of its maximum. For D3, with three passes, the final pass will limit the charge difference to one-eighth of its maximum.

However, the bit-by-bit multi-pass programming technique will be compromised by partial-page programming. A page is a group of memory cells, typically along a row or word line, that is programmed together as a unit. It is possible to program non overlapping portions of a page individually over multiple programming passes. However, owning to not all the cells of the page are programmed in a final pass together, it could create large difference in charges programmed among the cells after the page is done. Thus partial-page programming would result in more program disturb and would require a larger margin for sensing accuracy.

In the case the memory is configured as binary memory, the margin of operation is wider than that of MLC. In the preferred embodiment, the binary memory is configured to support partial-page programming in which non-overlapping portions of a page may be programmed individually in one of the multiple programming passes on the page. The programming and reading performance can be improved by operating with a page of large size. However, when the page size is much larger than the host's unit of write (typically a 512-byte sector), its usage will be inefficient. Operating with finer granularity than a page allows more efficient usage of such a page.

The example given has been between binary versus MLC. It should be understood that in general the same principles apply between a first memory with a first number of levels and a second memory with a second number of levels more than the first memory.

### LOGICAL AND PHYSICAL BLOCK STRUCTURES

**FIG. 8** illustrates the memory being managed by a memory manager with is a software component that resides in the controller. The memory 200 is organized into blocks, each block of cells being a minimum unit of erase. Depending on implementation, the memory system may operate with even large units of erase formed by an aggregate of blocks into "metablocks" and also "megablocks". For convenience the description will refer to a unit of erase as a metablock although it will be understood that some systems operate with even larger unit of erase such as a "megablock" formed by an aggregate of metablocks.

The host 80 accesses the memory 200 when running an application under a file system or operating system. Typically, the host system addresses data in units of logical sectors where, for example, each sector may contain 512 bytes of data. Also, it is usual for the host to read or write to the memory system in unit of logical clusters, each consisting of one or more logical sectors. In some host systems, an optional host-side memory manager may exist to perform lower level memory management at the host. In most cases during read or write operations, the host 80 essentially issues a command to the memory system 90 to read or write a segment containing a string of logical sectors of data with contiguous addresses.

A memory-side memory manager 300 is implemented in the controller 100 of the memory system 90 to manage the storage and retrieval of the data of host logical sectors among metablocks of the flash memory 200. The memory manager comprises a front-end system 310 and a back-end system 320. The front-end system 310 includes a host interface 312. The back-end system 320 includes a number of software modules for managing erase, read and write operations of the metablocks. The memory manager also maintains system control data and directory data associated with its operations among the flash memory 200 and the controller RAM 130.

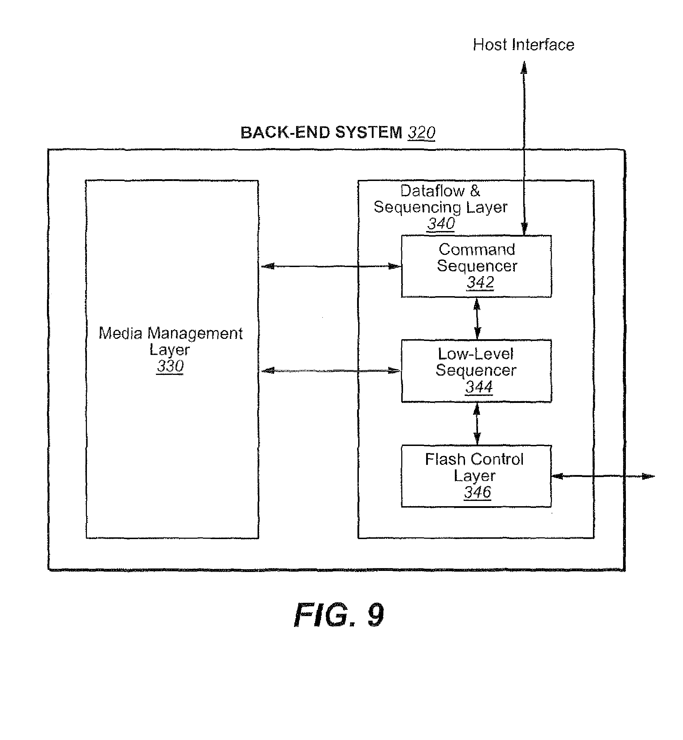

**FIG. 9** illustrates the software modules of the back-end system. The Back-End System mainly comprises two functional modules: a Media Management Layer 330 and a Dataflow and Sequencing Layer 340.

The media management layer 330 is responsible for the organization of logical data storage within a flash memory meta-block structure. More details will be provided later in the section on "Media management Layer".

The dataflow and sequencing layer 340 is responsible for the sequencing and transfer of sectors of data between a front-end system and a flash memory. This layer includes a command sequencer 342, a low-level sequencer 344 and a flash Control layer 346. More details will be provided later in the section on "Low Level System Spec".

The memory manager 300 is preferably implemented in the controller 100. It translates logical addresses received from the host into physical addresses within the memory array, where the data are actually stored, and then keeps track of these address translations.

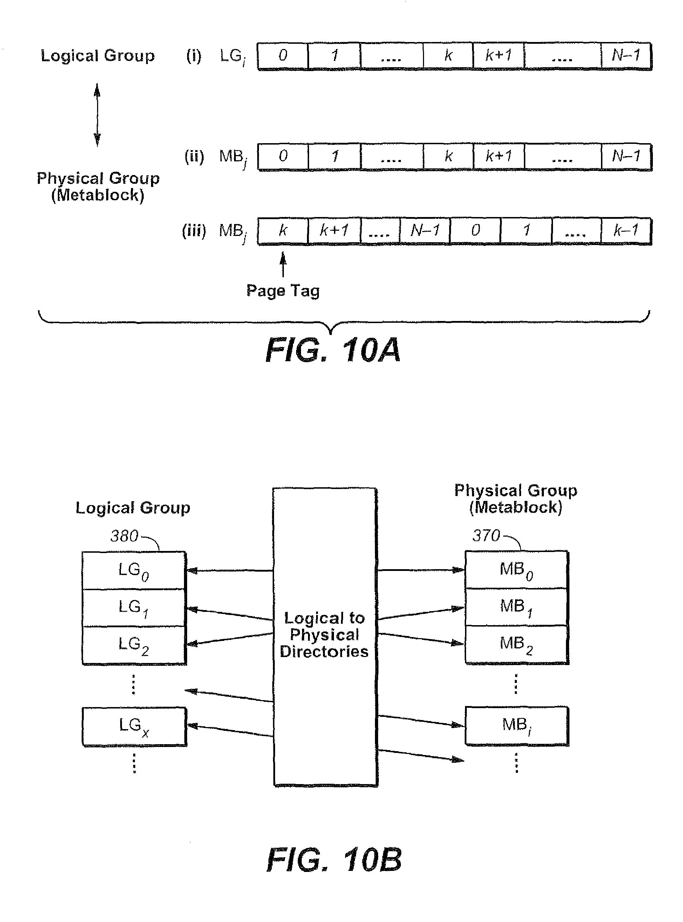

**FIGs. 10A(i) - 10A(iii)** illustrate schematically the mapping between a logical group and a metablock. The metablock of the physical memory has N physical sectors for storing *N* logical sectors of data of a logical group. **FIG. 10A(i)** shows the data from a logical group LG*ᵢ*, where the logical sectors are in contiguous logical order *0, 1, ..., N-1.* **FIG. 10A(ii)** shows the same data being stored in the metablock in the same logical order. The metablock when stored in this manner is said to be "sequential." In general, the metablock may have data stored in a different order, in which case the metablock is said to be "non-sequential" or "chaotic."

There may be an offset between the lowest address of a logical group and the lowest address of the metablock to which it is mapped. In this case, logical sector address wraps round as a loop from bottom back to top of the logical group within the metablock. For example, in **FIG. 10A(iii),** the metablock stores in its first location beginning with the data of logical sector *k.* When the last logical sector *N-1* is reached, it wraps around to sector *0* and finally storing data associated with logical sector *k-1* in its last physical sector. In the preferred embodiment, a page tag is used to identify any offset, such as identifying the starting logical sector address of the data stored in the first physical sector of the metablock. Two blocks will be considered to have their logical sectors stored in similar order when they only differ by a page tag.

**FIG. 10B** illustrates schematically the mapping between logical groups and metablocks. Each logical group 380 is mapped to a unique metablock 370, except for a small number of logical groups in which data is currently being updated. After a logical group has been updated, it may be mapped to a different metablock. The mapping information is maintained in a set of logical to physical directories, which will be described in more detail later.

### SATELLITE FILE SYSTEM

This section presents the use of a satellite file system for memory systems using dual memory banks. To improve performance, the controller executes a back end thread for each of the banks and communicates with each back through a separate interface. One of the banks has the main file system for managing the memory, but copies of some important files are stored in the other bank in a satellite file system. The satellite file system improves performance by providing both threads access to copies of the files needed during normal system operations without the threads needing to rely upon just the main file system. Each of these banks may consist of one or more chips or be semi-autonomous arrays that can be independently operated on a single chip; and although discussed here for the case of two memory banks, and a corresponding number of bank end threads for the controller's back end. The discussion below will also be given in the context of a memory card using a NAND-type architecture for memory arrays, but readily extends to architectures and non-card uses, such as embedded systems, SSD, and so on.

Although the following discussion may be based on various exemplary embodiments to provide concrete examples, the techniques and structures here can be applied fairly generally to memory systems having a controller and multiple banks that can independently operated, where the banks include some amount of non-volatile memory, whether flash or other variety, that can be used to store system data that the controller can use to manage the memory system. In addition to the other referenced cited above, theses can include the various memory systems presented in the following US patent, patent publication and application numbers: 7,480,766; US-2005-0154819-A1; US-2007-0061581-A1; US-2007-0061597-A1; US-2007-0113030-A1; US-2008-0155178-A1; US-2008-0155228-A1; US-2008-0155176-A1; US-2008-0155177-A1; US-2008-0155227-A1; US-2008-0155175-A1; 12/348,819 (published as US-2010-017484); 12/348,825 (published as US-2010-0172179; 12/348,891 (published as US-2010-0172180); 12/348,895 (published as US-2010-0174846); 12/348,899 (published as US-2010-0174847) and 61/142,620.

FIG. 11 is a block diagram illustrating some of the relevant elements of an exemplary two-bank embodiment employing a satellite file system. A host 401 is connected to the memory system 403, which has controller circuitry 411 and memory banks BANK 0 421-0 and BANK 1 421-1 in this example. The controller communicates with the host through host interface 413 and to each of the banks through a corresponding interface BANK INT 419. In the firmware control, the controller 411 executes a front end portion 415 and a back end thread 417 for each bank. In the exemplary embodiment, there is a single host interface 413 and so is the circuitry that transfers the data is also single. The logic in the Front End Thread 413 runs in the controller circuit along with the Backend Firmware Threads (417-0, 417-1) and assigns work for the Backend Firmware Threads. The front end may individually assign tasks to a single bank, or splits tasks between the banks, such as, for example, on a large write command part of the data could be written in one bank and the remaining part in the other bank to increase write performance through parallelism. Although not explicitly shown, in **FIG. 11** the controller will typically have one large contiguous buffer used for data transfers, which is then logically segregated for the different banks. When data is transferred, the data intended for a specific bank is then transferred into its logically segregated buffer. Alternate embodiments could employ physically distinct buffers.

A number of memory systems have used multiple banks for the memory circuitry to increase parallelism and, consequently, performance. This can be further improved by including the multiple bank interfaces and, further still, by the inclusion of back end thread for each bank, as both shown in **FIG. 11****.** As shown **FIG. 11****,** this is extended by providing each bank with a copy of the file system, with the main file system being kept in one bank (taken here as BANK 0 421-0) and satellite copies being kept in other banks, thereby allowing each back end thread (417-0, 417-1) to independently access its own copy (in 421-0, 421-1, respectively) during regular memory operation. (It should be noted that although **FIG. 11** refers to firmware control, it will be understood the various functions can implemented in hardware, software, firmware or various combinations of these, as is familiar in the art.)

Typically, previous arrangements would maintain only a single copy (or single active copy) of the file system. Considering this for the case of a dual bank architecture and that contains two hardware banks, with corresponding software control, the software control could largely execute in parallel. If only a single copy stored all the file system information would be stored on one bank, say Bank 0, and only Bank 0 can (directly) access this information. The file system would store items such as configuration information, firmware microcode and overlay code. Various modules in the system access the file system to retrieve the information they need. Barring overlay code and link table information, which stores the physical link information as described above, all the information that is stored in the file system is read during the card boot up/power on/reset time. During this time, only Bank 0 Thread 417-0 is active and hence there is no issue of contention, performance degradation or deadlock between the two block threads; however, during the subsequent normal course of the card operation, the overlay and link table information needs to be accessed by all the banks based on their individual needs.

Subsequent to the boot, once all the banks are running, any bank that does not have the file system information will need to interrupt Bank 0 and request Bank 0 to fetch the required information. This arrangement poses several risks to the system. A first of these is that the information sought from the file system is a continuous process and not a one time request. Interrupting Bank 0 on a regular basis would compromise the system performance. Others are the result of a system where some or all host requests are executed by both (or, more generally, all) banks simultaneously. Though tasks can be split between the banks, banks are inter-dependent and wait for tasks to be completed. Bank 0 could be waiting for Bank 1 to finish its task before becoming free; but Bank 1 might need to access file system information and hence interrupt and request Bank 0. This is a deadlock situation as Bank 0 will be unable to process the request since it is waiting for Bank 1 to complete the host operation.

Consequently, for memory systems whose firmware uses a file system to store non-volatile control information and when multiple channels (or banks) are used to access the firmware, a single copy of this file system becomes an access bottleneck. The introduction of a satellite file system provides a way around this problem by creating a read-only copy of critical portions of the File System that is needed by the secondary banks. Although this increases the amount of non-volatile memory that needs to be set aside for control data, with a corresponding decrease in the amount available for user data, given the current and continuing increase of capacity in such systems, this will be a more than acceptable price for the resultant performance improvements.

Thus, a primary aspect presented here, is the creation and storage of read only copies of certain files on the second or other additional banks in a dual- or multi-bank system. The satellite file system is a subset of the main file System In the exemplary embodiment, the satellite file system contains all of the files needed in the course of standard, post-boot operations and only the main system has copies of the files used for just during the card boot up/power on/reset time, as initially only the one bank is operating at these times. As the threads request files, the file system module can route these calls based on the bank.

Returning to **FIG. 11****,** maintaining the satellite file system solves these issues by introducing copies for all of the banks of files needed by the banks during the normal card operation. Consequently, BANK 1 421-1 includes the satellite file system in addition to the boot block and user, or host, data. In addition to the boot block and user data, BANK 0 421-0 has the main file system. Copies of some important files that can be stored in a special area in other banks and location information of those copies is stored in the main file system. To improve system reliability, each bank will typically also maintain a back up copy of the main or satellite (as appropriate) file system. Each back end thread 417-0 and 417-1 then performs its functions (read/operations, control operations, various background and low level operations, and so on, as discussed in preceding sections and the various cited references) for the corresponding bank using its respective copy of the file system.

In a preferred embodiment, during the low level card format, a special satellite file system area is created in bank or banks that do not contain the main copy of the file system. As soon as the main file system is written to, the files that are needed are identified and copied into the satellite file systems. While copying, the location information of the satellite files is stored in the main file system directory. This file system directory is read during the card boot up/power on/reset time and can be accessed by any bank.

When Bank 1 thread 417-1 requests the file system information, which is contained in one of the special files, the file system modules can recognize the request and fetch the information from the file copy that is stored in the satellite file system in BANK 1 421-1. It does not interrupt BANK 0 421-0, which is not even aware of such a request.

Like the Main File System, the Satellite File System preferably contains two copies of all the files that it contains, to provide fault tolerance. Since information stored in the satellite file system is fixed and does not change over the lifetime of the card, the satellite file system does not allow any updates to the files that it contains.

**FIG. 12** depicts the elements of the main file system in Bank 0 and the satellite file system in Bank 1 according to the exemplary embodiment. Both banks will have a boot block as well as the user data area and various other control data such as discussed in the preceding sections or cited references. Both the main and satellite file systems have copies of the files needed during regular operations, such as Link Table files and various overlay files. As Bank 0 is the bank initially active during the boot process, the main file system contains the firmware file, overlay file, flash RISC code file by which the controller interacts with the memory banks, control RISC code file (this is for the controller that interfaces with the host to transfer data), link table file (specifying how the metablocks in the memory are logically linked) and various configuration files.

Under this arrangement, the controller is then able to independently and simultaneously execute a plurality of backend firmware threads (software threads), each of which is responsible for managing (execute read/write operations, etc.) that happen on the memory bank to which it is assigned. In the exemplary embodiment, each backend firmware thread issues instructions to its memory bank through a dedicated Flash RISC controller (another controller circuit, one each for each Bank).

With respect to overlays, during boot up, firmware code is loaded into the RAM area of the controller circuit. As this RAM is generally relatively limited in size, the system often ends up having code that cannot be accommodated completely into this RAM area. To solve this issue, the code is often broken up into two parts: the main code, which needs to be present in the RAM always; and overlay code, which can be loaded in and out of the RAM on demand. The main code is stored in a filed called the Firmware File and the overlay code is stored in the Overlay File. The main code, due to its availability in the RAM always, is only loaded once during the boot up; however, sections of overlay code may be needed by any of the firmware threads during the normal execution of the card and the requirements to load such code are thread specific, hence the preference to store the overlay file in both banks.

The foregoing detailed description of the invention has been presented for purposes of illustration and description. It is not intended to be exhaustive or to limit the invention to the precise form disclosed. Many modifications and variations are possible in light of the above teaching. The described embodiments were chosen in order to best explain the principles of the invention and its practical application, to thereby enable others skilled in the art to best utilize the invention in various embodiments and with various modifications as are suited to the particular use contemplated. It is intended that the scope of the invention be defined by the claims appended hereto.

## Claims

1. A non-volatile memory system, comprising:
a non-volatile memory circuit having a plurality of independently operable banks (421-0, 421-1) including a first bank (421-0) and one or more other banks (421-1), each of the banks (421-0, 421-1) including one or more non-volatile memory arrays to store user data and system data; and
a controller circuit (411) to manage the storage of user data on the memory circuit, including:
a plurality of bank interfaces (419-0, 419-1), each connected to a respective one of the banks (421-0, 421-1) to transfer data between the controller (411) and the corresponding bank (421-0, 421-1); and
processing circuitry (411) for executing computer executable code stored in the memory system, **characterized in that** the processing circuit (411), when executing the computer executable code. executes a plurality of threads (417-0, 417-1), each capable of independently and concurrently executing read and write operations on a corresponding one of the banks (421-0, 421-1);
wherein:
the first bank (421-0) stores system data including a file system;
a corresponding thread (417-0) of the plurality of threads (417-0, 417-1) is configured to use the file system to execute read and write operations on the first bank (421-0);
each of the one or more other banks (421-1) stores system data including a copy of a portion of the file system; and
for each of the one or more other banks (421-1) a corresponding thread (417-1) of the plurality of threads (417-0,417-1) is configured to use the respective copy of the file system stored on the respective one of the one or more other banks (421-1) to execute read and write operations on the respective one of the one or more other banks (421-1).

2. The non-volatile memory system of claim 1, wherein the processing circuitry 411 includes a dedicated controller for each thread to manage the corresponding bank by issuing instructions thereto through the respective bank interface (419-0, 419-1).

3. The non-volatile memory system of claim 1, wherein the copies of a portion of the file system are read only copies.

4. The non-volatile memory system of claim 1, wherein the non-volatile memory arrays are formed of physical erase blocks and wherein the controller (411) manages the memory using structures of multiple blocks logically linked into composite structures, where the file system and the portion of the file system both include the linking information by which the composite structures are formed.

5. The non-volatile memory system of claim 1, where the file system and the portion of the file system both include one or more overlay files for controlling the corresponding banks.

6. The non-volatile memory system of claim 1, where the controller (411) further includes a host interface (413) to transfer data between the memory system and a host (401) to which the non-volatile memory system is connected and wherein the processing circuitry (411) further executes a front end thread managing interactions between the controller (411) and the host (401).

7. The non-volatile memory system of claim 6, wherein the front end thread (415) assigns tasks for the plurality of threads (417-0, 417-1) managing the banks (421-0, 421-1).

8. The non-volatile memory system of claim 1, wherein the first of the banks stores (421-0) multiple copies of the file system and each of the other banks (421-1) stores multiple copies of the portion of the file system.

9. A method of operation of a non-volatile memory system, the memory system including a non-volatile memory circuit having a plurality of independently operable banks (421-0, 421-1) including a first bank (421-0) and a second bank (421-1) and a controller circuit (411) to manage the storage of user data on the memory circuit, the method being **characterized in that** it comprises:
storing in non-volatile memory on the first bank (421-0) system data including a file system;
storing in non-volatile memory on the second bank (421-1) system data including a copy of a portion of the file system;
executing on the controller (411) a first thread (417-0) for executing read and write operations on the first bank (421-0) using the file system; and
concurrently with executing the first thread, executing on the controller (411) a second thread (417-1) for executing read and write operations on the second bank (421-1) using the copy of the file system independently of the file system stored in the first bank (421-0).

10. The method of claim 9, wherein the copy of a portion of the file system is a read only copy.

11. The method of claim 9, wherein the non-volatile memory arrays are formed of physical erase blocks and wherein the controller (411) manages the memory using structures of multiple blocks logically linked into composite structures, where the file system and the portion of the file system both include the linking information by which the composite structures are formed.

12. The method of claim 9, where the file system and the portion of the file system both include one or more overlay files for controlling the corresponding banks.

13. The method of claim 9, further comprising:
prior to executing the second thread (417-1) on the controller (411), performing a boot up process executed by the first thread (417-0) using information in the files system stored on the first bank (421-0) that is not included in the portion of the file system.

14. The method of claim 13, where the information used during the boot up process that is not included in the portion of the file system includes firmware files.

15. The method of claim 14, where the information used during a boot up process that is not included in the portion of the file system further includes code files for managing of the banks (421-0, 421-1) by the threads (417-0, 417-1) and for interfacing to a host (401) to which the memory system is attached.

## Patentansprüche

1. Nichtflüchtiges Speichersystem, Folgendes umfassend:
eine nichtflüchtige Speicherschaltung mit einer Vielzahl von unabhängig betriebsfähigen Bänken (421-0, 421-1) einschließlich einer ersten Bank (421-0) und einer oder mehrerer anderer Bänke (421-1), wobei jede der Bänke (421-0, 421-1) ein oder mehrere nichtflüchtige Speicherarrays einschließt, um Benutzerdaten und Systemdaten zu speichern; und
eine Controllerschaltung (411) zum Verwalten der Speicherung von Benutzerdaten auf der Speicherschaltung, Folgendes einschließend:
eine Vielzahl von Bankschnittstellen (419-0, 419-1), deren jede an eine jeweilige der Bänke (421-0, 421-1) angeschlossen ist, um Daten zwischen dem Controller (411) und der entsprechenden Bank (421-0, 421-1) zu übertragen; und
Verarbeitungsschaltungen (411) zum Ausführen von computerausführbarem Code, der im Speichersystem gespeichert ist, **dadurch gekennzeichnet, dass**
die Speicherschaltung (411), wenn sie den computerausführbaren Code ausführt, eine Vielzahl von Threads (417-0, 417-1) ausführt, deren jeder befähigt ist, unabhängig und gleichzeitig Lese- und Schreiboperationen auf einer entsprechenden der Bänke (421-0, 421-1) auszuführen;
worin:
die erste Bank (421-0) Systemdaten einschließlich eines Dateisystems speichert:
ein entsprechender Thread (417-0) der Vielzahl von Threads (417-0, 417-1) dazu konfiguriert ist, das Dateisystem zu verwenden, um Lese- und Schreiboperationen auf der ersten Bank (421-0) auszuführen;
jede der einen oder der mehreren anderen Bänke (421-1) Systemdaten speichert einschließlich einer Kopie eines Teils des Dateisystems; und
für jede der einen oder der mehreren anderen Bänke (421-1) ein entsprechender Thread (417-1) der Vielzahl von Threads (417-0, 417-1) dazu konfiguriert ist, die jeweilige Kopie des Dateisystems zu verwenden, die auf der jeweiligen der einen oder der mehreren anderen Bänke (421-1) gespeichert ist, um Lese- und Schreiboperationen auf der jeweiligen der einen oder der mehreren anderen Bänke (421-1) auszuführen.

2. Nichtflüchtiges Speichersystem nach Anspruch 1, worin die Verarbeitungsschaltungen (411) einen dedizierten Controller für jeden Thread einschließen, um die entsprechende Bank zu verwalten, indem Anweisungen durch die jeweilige Bankschnittstelle (419-0, 419-1) dorthin ausgegeben werden.

3. Nichtflüchtiges Speichersystem nach Anspruch 1, worin die Kopien eines Teils des Dateisystems schreibgeschützte Kopien sind.

4. Nichtflüchtiges Speichersystem nach Anspruch 1, worin die nichtflüchtigen Speicherarrays aus physikalischen Löschblöcken geformt sind und worin der Controller (411) den Speicher unter Verwendung von Strukturen von mehrfachen Blöcken verwaltet, die mit zusammengesetzten Strukturen logisch verknüpft sind, wo sowohl das Dateisystem als auch der Teil des Dateisystems die Verknüpfungsinformation einschließen, durch die die zusammengesetzten Strukturen geformt werden.

5. Nichtflüchtiges Speichersystem nach Anspruch 1, worin sowohl das Dateisystem als auch der Teil des Dateisystems eine oder mehrere Overlay-Dateien einschließen, um die entsprechenden Bänke zu steuern.

6. Nichtflüchtiges Speichersystem nach Anspruch 1, worin der Controller (411) außerdem eine Host-Schnittstelle (413) einschließt, um Daten zwischen dem Speichersystem und einem Host (401) zu übertragen, an den das nichtflüchtige Speichersystem angeschlossen ist, und worin die Verarbeitungsschaltungen (411) außerdem einen Frontend-Thread Ausführen, der Interaktionen zwischen dem Controller (411) und dem Host (401) verwaltet.

7. Nichtflüchtiges Speichersystem nach Anspruch 6, worin der Frontend-Thread (415) Tasks für die Vielzahl von Threads (417-0, 417-1) zuweist, die die Bänke (421-0, 421-1) verwalten.

8. Nichtflüchtiges Speichersystem nach Anspruch 1, worin die erste der Bänke (421-0) mehrfache Kopien des Dateisystems speichert und jede der anderen Bänke (421-1) mehrfache Kopien des Teils des Dateisystems speichert.

9. Verfahren zum Betrieb eines nichtflüchtigen Speichersystems, wobei das Speichersystem eine nichtflüchtige Speicherschaltung einschließt, die eine Vielzahl von unabhängig betriebsfähigen Bänken (421-0, 421-1) hat einschließlich einer ersten Bank (421-0) und einer zweiten Bank (421-1) und einer Controllerschaltung (411), um die Speicherung von Benutzerdaten auf der Speicherschaltung zu verwalten, wobei das Verfahren **dadurch gekennzeichnet ist, dass** es Folgendes umfasst:
Speichern in einem nichtflüchtigen Speicher auf der ersten Bank (421-0) von Systemdaten einschließlich eines Dateisystems;
Speichern in einem nichtflüchtigen Speicher auf der zweiten Bank (421-1) von Systemdaten einschließlich einer Kopie eines Teils des Dateisystems;
Ausführen eines ersten Threads (417-0) auf dem Controller (411) zum Ausführen von Lese- und Schreiboperationen auf der ersten Bank (421-0) unter Verwendung des Dateisystems; und
gleichzeitig mit dem Ausführen des ersten Threads das Ausführen auf dem Controller (411) eines zweiten Threads (417-1) zum Ausführen von Lese- und Schreiboperationen auf der zweiten Bank (421-1) unter Verwendung der Kopie des Dateisystems unabhängig vom Dateisystem, das in der ersten Bank (421-0) gespeichert ist.

10. Verfahren nach Anspruch 9, worin die Kopie eines Teils des Dateisystems eine schreibgeschützte Kopie ist.

11. Verfahren nach Anspruch 9, worin die nichtflüchtigen Speicherarrays aus physikalischen Löschblöcken geformt sind und worin der Controller (411) den Speicher unter Verwendung von Strukturen von mehrfachen Blöcken verwaltet, die mit zusammengesetzten Strukturen logisch verknüpft sind, wo sowohl das Dateisystem als auch der Teil des Dateisystems die Verknüpfungsinformation einschließen, durch die die zusammengesetzten Strukturen geformt werden.

12. Verfahren nach Anspruch 9, worin sowohl das Dateisystem als auch der Teil des Dateisystems eine oder mehrere Overlay-Dateien einschließen, um die entsprechenden Bänke zu steuern.

13. Verfahren nach Anspruch 9, außerdem umfassend:
vor dem Ausführen des zweiten Threads (417-1) auf dem Controller (411) das Ausführen eines Urladeprozesses, der durch den ersten Thread (417-0) ausgeführt wird unter Verwendung von Information im auf der ersten Bank (421-0) gespeicherten Dateisystem, die nicht im Teil des Dateisystems enthalten ist.

14. Verfahren nach Anspruch 13, worin die während des Urladeprozesses verwendete Information, die nicht im Teil des Dateisystems eingeschlossen ist, Firmware-Dateien einschließt.

15. Verfahren nach Anspruch 14, wo die während eines Urladeprozesses verwendete Information, die nicht im Teil des Dateisystems eingeschlossen ist, außerdem Codedateien einschließt, um die Bänke (421-0, 421-1) durch die Threads (417-0, 417-1) zu verwalten und um an einen Host (401) kompatibel anzuschließen, an den das Speichersystem angeschlossen ist.

## Revendications

1. Système de mémoire non volatile, comprenant :
un circuit de mémoire non volatile présentant une pluralité de banques exploitables de manière indépendante (421-0, 421-1) incluant une première banque (421-0) et une ou plusieurs autres banques (421-1), chacune des banques (421-0, 421-1) incluant une ou plusieurs matrices de mémoire non volatile en vue de stocker des données d'utilisateur et des données de système ; et
un circuit de contrôleur (411) destiné à gérer le stockage de données d'utilisateur sur le circuit de mémoire, incluant :
une pluralité d'interfaces de banque (419-0, 419-1), chacune connectée à une banque respective parmi les banques (421-0, 421-1), pour transférer des données entre le contrôleur (411) et la banque correspondante (421-0, 421-1) ; et
un montage de circuits de traitement (411) destiné à exécuter un code exécutable par ordinateur stocké dans le système de mémoire, **caractérisé en ce que**
le circuit de traitement (411), lors de l'exécution du code exécutable par ordinateur, exécute une pluralité de fils (417-0, 417-1), chaque fil étant apte à exécuter, simultanément et indépendamment, des opérations de lecture et d'écriture sur une banque correspondante parmi les banques (421-0, 421-1) ;
dans lequel :
la première banque (421-0) stocke des données de système incluant un système de fichiers ;
un fil correspondant (417-0) de la pluralité de fils (417-0, 417-1) est configuré de manière à utiliser le système de fichiers en vue d'exécuter des opérations de lecture et d'écriture sur la première banque (421-0) ;
chacune de ladite une ou desdites plusieurs autres banques (421-1) stocke des données de système incluant une copie d'une partie du système de fichiers ; et
pour chacune de ladite une ou desdites plusieurs autres banques (421-1), un fil correspondant (417-1) de la pluralité de fils (417-0, 417-1) est configuré de manière à utiliser la copie respective du système de fichiers stocké sur la banque respective de ladite une ou desdites plusieurs autres banques (421-1), en vue d'exécuter des opérations de lecture et d'écriture sur la banque respective parmi ladite une ou lesdites plusieurs autres banques (421-1).

2. Système de mémoire non volatile selon la revendication 1, dans lequel le montage de circuits de traitement (411) inclut un contrôleur dédié pour chaque fil, en vue de gérer la banque correspondante en émettant des instructions connexes à travers l'interface de banque respective (419-0, 419-1).

3. Système de mémoire non volatile selon la revendication 1, dans lequel les copies d'une partie du système de fichiers correspondent à des copies en lecture seule.

4. Système de mémoire non volatile selon la revendication 1, dans lequel les matrices de mémoire non volatile sont constituées de blocs d'effacement physique, et dans lequel le contrôleur (411) gère la mémoire en utilisant des structures de multiples blocs liées logiquement sous la forme de structures composites, où le système de fichiers et la partie du système de fichiers incluent tous deux des informations de liaison au moyen desquelles les structures composites sont constituées.

5. Système de mémoire non volatile selon la revendication 1, où le système de fichiers et la partie du système de fichiers incluent tous deux un ou plusieurs fichiers de superposition destinés à commander les banques correspondantes.

6. Système de mémoire non volatile selon la revendication 1, où le contrôleur (411) inclut en outre une interface hôte (413) destinée à transférer des données entre le système de mémoire et un hôte (401) auquel est connecté le système de mémoire non volatile, et dans lequel le montage de circuits de traitement (411) exécute en outre un fil d'extrémité frontale gérant les interactions entre le contrôleur (411) et l'hôte (401).

7. Système de mémoire non volatile selon la revendication 6, dans lequel le fil d'extrémité frontale (415) affecte des tâches pour la pluralité de fils (417-0, 417-1) gérant les banques (421-0, 421-1).

8. Système de mémoire non volatile selon la revendication 1, dans lequel la première des banques (421-0) stocke de multiples copies du système de fichiers et chacune des autres banques (421-1) stocke de multiples copies de la partie du système de fichiers.

9. Procédé d'exploitation d'un système de mémoire non volatile, le système de mémoire incluant un circuit de mémoire non volatile présentant une pluralité de banques exploitables de manière indépendante (421-0, 421-1) incluant une première banque (421-0) et une seconde banque (421-1), et un circuit de contrôleur (411) pour gérer le stockage de données d'utilisateur sur le circuit de mémoire, le procédé étant **caractérisé en ce qu'**il comporte les étapes ci-dessous consistant à :
stocker, dans la mémoire non volatile, sur la première banque (421-0), des données de système incluant un système de fichiers ;
stocker, dans la mémoire non volatile, sur la seconde banque (421-1), des données de système incluant une copie d'une partie du système de fichiers ;
exécuter, sur le contrôleur (411), un premier fil (417-0) destiné à exécuter des opérations de lecture et d'écriture sur la première banque (421-0), en utilisant le système de fichiers ; et
simultanément à l'exécution du premier fil, exécuter, sur le contrôleur (411), un second fil (417-1) destiné à exécuter des opérations de lecture et d'écriture sur la seconde banque (421-1), en utilisant la copie du système de fichiers indépendamment du système de fichiers stocké dans la première banque (421-0).

10. Procédé selon la revendication 9, dans lequel la copie d'une partie du système de fichiers correspond à une copie en lecture seule.

11. Procédé selon la revendication 9, dans lequel les matrices de mémoire non volatile sont constituées de blocs d'effacement physique, et dans lequel le contrôleur (411) gère la mémoire en utilisant des structures de multiples blocs liées logiquement sous forme de structures composites, où le système de fichiers et la partie du système de fichiers incluent tous deux des informations de liaison au moyen desquelles les structures composites sont constituées.

12. Procédé selon la revendication 9, où le système de fichiers et la partie du système de fichiers incluent tout deux un ou plusieurs fichiers de superposition pour commander les banques correspondantes.

13. Procédé selon la revendication 9, comprenant en outre l'étape ci-dessous consistant à :
préalablement à l'exécution du second fil (417-1) sur le contrôleur (411), mettre en oeuvre un processus d'amorçage exécuté par le premier fil (417-0) en utilisant des informations, dans le système de fichiers stocké sur la première banque (421-0), qui ne sont pas incluses dans la partie du système de fichiers.

14. Procédé selon la revendication 13, où les informations utilisées au cours du processus d'amorçage qui ne sont pas incluses dans la partie du système de fichiers incluent des fichiers de micrologiciel.

15. Procédé selon la revendication 14, où les informations utilisées au cours d'un processus d'amorçage qui ne sont pas incluses dans la partie du système de fichiers incluent en outre des fichiers de code destinés à la gestion des banques (421-0, 421-1) par les fils (417-0, 417-1) et à l'interfaçage avec un hôte (401) auquel est rattaché le système de mémoire.
